# EUROPEAN PATENT SPECIFICATION

(11) **EP 1 127 625 B1**
(45) Date of publication and mention of the grant of the patent: **01.03.2006**
(21) Application number: 00309236.8
(22) Date of filing: 20.10.2000
(51) Int. Cl.: G03G 15/10, G03G 13/10

(54) **Sheet coating apparatus**
Vorrichtung zur Beschichtung von blattförmigem Material
Appareil de revêtement de feuilles

(30) Priority: 25.02.2000 KR 2000009388
(43) Date of publication of application: 29.08.2001
(73) Proprietor: SAMSUNG ELECTRONICS CO., LTD., Suwon-City, Kyungki-do (KR)
(72) Inventor: Yoo, Yong-baek, Changan-gu, Suwon-city, Kyungki-do (KR); Yon, Kyung-yol, Pundang-gu, Seongnam-city, Kyungki-do (KR)
(74) Representative: Chugg, David John

(56) References cited:
- GB-A- 797 027
- GB-A- 1 452 149
- US-A- 3 281 241
- US-A- 4 258 115
- US-A- 4 278 343
- US-A- 4 410 260
- US-A- 5 121 164
- US-A- 5 220 384
- US-A- 5 689 779
- US-A- 6 061 540
- PATENT ABSTRACTS OF JAPAN vol. 007, no. 150 (P-207), 30 June 1983 (1983-06-30) & JP 58 059474 A (RICOH KK), 8 April 1983 (1983-04-08)

## Description

The present invention relates to a sheet coating apparatus for applying a predetermined coating liquid onto a sheet.

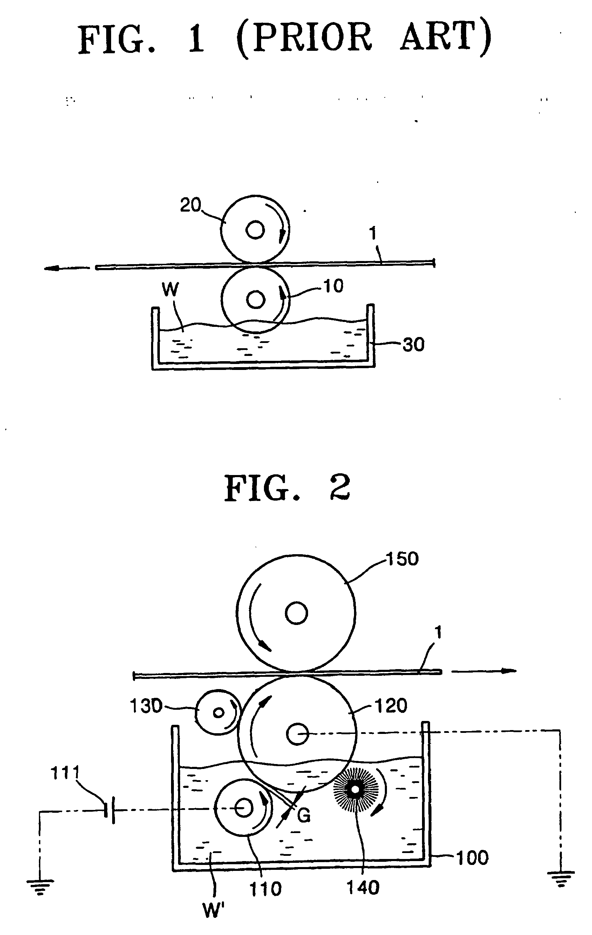

In a liquid electrophotographic printer, e.g., a laser printer, in order to prevent a printed image from blotting on paper and to improve the resolution of an image, a coating apparatus for applying a coating liquid such as wax after a printing operation has been proposed. A conventional coating apparatus, as shown in Figure 1, is configured such that a coating roller 10 and a backup roller 20 are rotatably installed along the traveling path through which a sheet 1 passes, and the coating roller 10 is partially immersed in a storage tank 30 containing a liquid wax W. Accordingly, the wax W sticking to the coating roller 10 is coated onto the printed surface of the sheet 1 passing between the coating roller 10 and the backup roller 20.

However, in the above-described coating system, since there is no means of regulating the amount of wax W moving upward along the surface of the coating roller 10 according to rotation thereof is to be coated onto the sheet 1 the coating roller 10, it is not possible to regulate the amount of coated wax. Thus, the amount of coated wax is nonuniform and excess wax is likely to be coated, which results in increased consumption of a coating liquid. If the content of the coating liquid is reduced, that is, if the content of a liquid carrier which is a solvent contained in the coating liquid, is increased, the amount of the coating liquid consumed can be reduced. However, since the liquid carrier heavily contained in the coating liquid is considerably absorbed into the sheet 1, the image printed on the sheet 1 is likely to blot. In order to overcome the problem of carrier absorption, if the content of the wax is increased, the consumption of the coating liquid increases. Also, since the viscosity of the coating liquid is increased, the flow of the coating liquid is not smooth, and thus the coating thickness becomes nonuniform. Therefore, a coating apparatus which can allow uniform coating while reducing the consumption of a coating liquid, is required.

US-A-4410260 discloses an apparatus for developing an electrostatic latent image formed on a flexible electrophotographic belt by means of a liquid toner and then transferring this image onto a carrier medium. The toning station comprises a sump which is open at it's top and which contains a body of toner in suspension. A toning roller and a metering roller are provided, which are both partially immersed in the toner.

GB-A-1452149 discloses an electro-photographic developing apparatus for developing an electrostatic latent image formed on a photosensitive drum by means of a liquid toner and transferring the toner image onto a copy sheet. The apparatus comprises a storage vessel in which a liquid developer is located. The developer is pumped through a liquid inlet orifice into a space between a drum and an electrode so as to make contact with a latent image on the drum. This document forms the pre-characterising portion of the independent claim 1 appended hereto.

With a view to solve or reduce the above problems, it is an aim of embodiments of the present invention, to provide an improved sheet coating apparatus which can uniformly regulate the amount of a coating liquid coated onto a sheet.

According to the present invention there is provided an apparatus and method as set forth in the appended claims. Preferred features of the invention will be apparent from the dependent claims, and the description which follows.

According to an aspect of the invention, there is provided a sheet coating apparatus including a storage tank in which a coating liquid having charged coating particles dispersed therein is contained, a development roller rotatably installed to be immersed in the coating liquid, a voltage source for applying a voltage to the development roller, a coating roller rotatably installed in a state in which it is partially immersed in the coating liquid while maintaining a predetermined development gap relative to the development roller, and a compression roller for pressing a sheet passing between the same and the coating roller toward the coating roller while securely rotating with respect to the coating roller, wherein the coating particles adhere to the surface of the coating roller at the development gap due to an electric force to then be coated on the sheet passing between the coating roller and the compression roller.

Preferably, the apparatus further comprises a squeegee roller rotating in secure contact with the coating roller for compressing the coating particles coated on the coating roller before being coated on the sheet to make the coating particles into a film, for squeegeeing a carrier contained in the film.

The apparatus may further comprise a brush roller rotating in contact with the surface of the coating roller for removing coating particles remaining on the surface of the coating roller after coating the sheet.

The coating liquid is preferably wax organosol including a powdered wax, a liquid carrier which is a solvent and a charge control agent for charging the wax particles.

For a better understanding of the invention, and to show how embodiments of the same may be carried into effect, reference will..now.be made, by way of example, to the accompanying diagrammatic drawings in which:
Figure 1 is a schematic diagram illustrating a conventional sheet coating apparatus; and
Figure 2 is a schematic diagram illustrating a sheet coating apparatus according to an embodiment of the present invention.

The coating apparatus described in the present invention can be used for coating general sheet-type materials, but the following embodiments relate to the case of a coating liquid being coated on a sheet having an image printed thereon in a printer.

In a sheet coating apparatus according to the present invention, wax organosol having charged coating particles is used as a coating liquid. The coating liquid is a mixture of a powdered wax, a liquid carrier and a charge control agent, and the wax particles are charged by the charge control agent. The polarity of the wax particles may be either positive or negative. In the present embodiment, the wax particles are positively charged.

The coating liquid W' is accommodated in a storage tank 100, as shown in Figure 2. A development roller 110 rotating in a state in which it is immersed in the coating liquid W' is provided in the storage tank 100. A high voltage of approximately 200 to 600 V is applied from a voltage source 111 to the development roller 110. This is called a development bias voltage. Also, a coating roller 120 rotating while maintaining a development gap G of 50 to 200 µm relative to the development roller 110, is installed in the storage tank 100. The lower side of the coating roller 120 is immersed in the coating liquid W' and is kept at the development gap G relative to the development roller 110. The upper side of the coating roller 120 is securely pressed against a compression roller 150. The coating roller 120 is grounded to 0 volts. Thus, a development operation in which the charged wax particles contained in the coating liquid W' adheres to the surface of the coating roller 120, is carried out at the development gap G by a voltage difference between the development roller 110 and the coating roller 120. Reference numeral 130 denotes a squeegee roller securely pressed against the coating roller 120 and rotating. The squeegee roller 130 compresses the wax particles developed on the coating roller 120 to make the same into a film and squeegees the liquid carrier contained in the film. Reference numeral 140 denotes a brush roller for forming a uniform development film during development by removing wax particles adhering to the surface of the coating roller 120 before an area of the surface of the coating roller 120 reaches the development gap G.

In the apparatus having the aforementioned configuration, a sheet 1 to be coated passes between the coating roller 120 and the compression roller 150. Here, a development bias voltage is applied from the voltage source 111 to the development roller 110. Accordingly, development is carried out at the development gap G by an electric force so that the wax particles are developed on the surface of the coating roller 120. The developed wax particles are compressed by the squeegee roller 130 to then be made into a film.and then coated on one surface of the sheet 1 passing between the squeegee roller 130 and the compression roller 150 by greater tendency of the wax to adhere to the sheet 1 rather than to the coating roller 120. Thereafter, any wax particles remaining on the coating roller 120 are removed by the brush roller 140 and then the procedure following development is repeated for coating a subsequent sheet.

According to the above-described coating operation, wax particles are uniformly distributed by an induced electric force rather than adhering to the surface of the coating roller 120, to then be coated on the sheet 1. Thus, a uniform coating film can be formed with less coating liquid being consumed than in the conventional case. Also, the amount of wax coated on the sheet can be controlled by varying a development bias voltage.

As described above, the sheet coating apparatus according to the present invention can prevent excess coating liquid from being coated on a sheet and can prevent the coating liquid from being absorbed into the sheet by liquid carrier, by controlling the amount of the coating liquid coated on a sheet, thereby attaining uniform coating.

Although a few preferred embodiments have been shown and described, it will be appreciated by those skilled in the art that various changes and modifications might be made without departing from the scope of the invention, as defined in the appended claims.

## Claims

1. A sheet coating apparatus **characterized by**:
a storage tank (100) in which a coating liquid (W') having charged coating particles dispersed therein is contained;
a development roller (110) rotatably installed to be immersed in the coating liquid;
a voltage source (111) for applying a voltage to the development roller (110);
a coating roller (120) rotatably installed in a state in which it is partially immersed in the coating liquid (W') while maintaining a predetermined development gap relative to the development roller (110); and
a compression roller (150) for pressing a sheet (1) passing between the same and the coating roller (120) toward the coating roller (120) while securely rotating with respect to the coating roller (120), wherein the coating particles adhere to the surface of the coating roller (120) at the development gap due to an electric force to then be coated on the sheet passing between the coating roller (120) and the compression roller (150).

2. The sheet coating apparatus according to claim 1, further comprising a squeegee roller (130) rotating in secure contact with the coating roller (120) for compressing the coating particles coated on the coating roller (130) before being coated on the sheet (1) to make the coating particles into a film, for squeegeeing a carrier contained in the film.

3. The sheet coating apparatus according to claim 1 or 2, further comprising a brush roller (140) rotating in contact with the surface of the coating roller (120) for removing coating particles remaining on the surface of the coating roller (120) after coating the sheet.

4. The sheet coating apparatus according to claim 1, 2 or 3, wherein the coating liquid (W') is wax organosol including a powdered wax, a liquid carrier which is a solvent and a charge control agent for charging the wax particles.

## Patentansprüche

1. Vorrichtung zur Beschichtung von blattförmigem Material, **gekennzeichnet durch**:
einen Vorratsbehälter (100), in dem eine Beschichtungsflüssigkeit (W') mit darin fein verteilten, aufgeladenen Beschichtungspartikeln enthalten ist;
eine Entwicklungswalze (110), die rotierbar eingebaut ist, um in die Beschichtungsflüssigkeit eingetaucht zu werden;
eine Spannungsquelle (111) zum Anlegen einer Spannung an die Entwicklungswalze (110);
eine Beschichtungswalze (120), die rotierbar in einem Zustand eingebaut ist, wo sie teilweise in die Beschichtungsflüssigkeit (W') eingetaucht ist, während ein vorgegebener Entwicklungsspalt relativ zu der Entwicklungswalze (110) aufrechterhalten wird; und
eine Kompressionswalze (150) zum Anpressen eines zwischen dieser und der Beschichtungswalze (120) durchlaufenden Blattes (1) an die Beschichtungswalze (120), während sie sicher in Bezug auf die Beschichtungswalze (120) rotiert, wobei die Beschichtungspartikel an der Oberfläche der Beschichtungswalze (120) an dem Entwicklungsspalt aufgrund einer elektrischen Kraft anhaften, um anschließend auf das zwischen der Beschichtungswalze (120) und der Kompressionswalze (150) durchlaufende Blatt aufgetragen zu werden.

2. Blattbeschichtungsvorrichtung nach Anspruch 1, des Weiteren umfassend eine in festem Kontakt mit der Beschichtungswalze (120) rotierende Quetschwalze (130) zum Verdichten der auf der Beschichtungswalze (130) aufgetragenen Beschichtungspartikel, bevor sie auf das Blatt (1) aufgetragen werden, um die Beschichtungspartikel zu einer dünnen Schicht zu verarbeiten, um zum Abstreifen eines in der dünnen Schicht enthaltenen Trägers.

3. Blattbeschichtungsvorrichtung nach Anspruch 1 oder 2, des Weiteren umfassend eine im Kontakt mit der Oberfläche der Beschichtungswalze (120) rotierende Bürstenwalze (140) zum Entfemen von Beschichtungspartikeln, die auf der Oberfläche der Beschichtungswalze (120) nach dem Beschichten des Blattes übrig bleiben.

4. Blattbeschichtungsvorrichtung nach Anspruch 1, 2 oder 3, wobei die Beschichtungsflüssigkeit (W') Wachs-Organosol mit einem pulverförmigen Wachs, ein flüssiger Träger, der ein Lösungsmittel ist, und ein Aufladungssteuer-Reaktionsmittel zum Aufladen der Wachspartikel ist.

## Revendications

1. Dispositif de revêtement de feuille, **caractérisé par** :
- un réservoir de stockage (100) dans lequel est contenu un liquide de revêtement (W') ayant des particules de revêtement chargées dispersées dans celui-ci,
- un rouleau de développement (110) installé de manière rotative pour être immergé dans le liquide de revêtement,
- une source de tension (111) pour appliquer une tension au rouleau de développement (110),
- un rouleau de revêtement (120) installé de manière rotative dans un état dans lequel il est partiellement immergé dans le liquide de revêtement (W') tout en maintenant un espace de développement prédéterminé par rapport au rouleau de développement (110), et
- un rouleau de compression (150) pour comprimer une feuille (1) passant entre celui-ci et le rouleau de revêtement (120) vers le rouleau de revêtement (120), tout tournant de manière serrée par rapport au rouleau de revêtement (120), les particules de couchage adhérant à la surface du rouleau de revêtement (120) dans l'espace de développement du fait d'une force électrique pour ensuite être appliquées sur la feuille passant entre le rouleau de revêtement (120) et le rouleau de compression (150) .

2. Dispositif de revêtement de feuille selon la revendication 1, comportant de plus un rouleau racleur (130) tournant en contact serré avec le rouleau de revêtement (120) pour comprimer les particules de revêtement appliquées sur le rouleau de revêtement (130) avant qu'elles ne soient appliquées sur la feuille (1) pour transformer les particules de revêtement en un film, pour racler un support contenu dans le film.

3. Dispositif de revêtement de feuille selon la revendication 1 ou 2, comportant en outre un rouleau à brosse (140) tournant en contact avec la surface du rouleau de revêtement (120) pour enlever des particules de revêtement restant sur la surface du rouleau de revêtement (120) après revêtement de la feuille.

4. Dispositif de revêtement de feuille selon la revendication 1, 2 ou 3, dans lequel le liquide de revêtement (W') est un organosol de cire incluant une cire en poudre, un support liquide qui est un solvant et un agent de commande de charge pour charger les particules de cire.
